# EUROPÄISCHE PATENTSCHRIFT

(11) **EP 3 116 744 B1**
(45) Veröffentlichungstag und Bekanntmachung des Hinweises auf die Patenterteilung: **12.12.2018**
(21) Anmeldenummer: 15712823.2
(22) Anmeldetag: 13.03.2015
(51) Int. Cl.: B60N 2/24, B60N 2/42, B60N 2/427, F16F 9/53, F16F 15/00

(54) **VERFAHREN UND BAUGRUPPE ZUR ENERGIEABSORPTION VON BEI EINEM ÜBERLASTEREIGNIS EINWIRKENDEN BELASTUNGEN ZUM SCHUTZ VOR SCHÄDEN**
METHOD AND ASSEMBLY FOR ABSORBING ENERGY FROM LOADS BEING APPLIED DURING AN OVERLOAD EVENT IN ORDER TO PREVENT DAMAGE
PROCÉDÉ ET ENSEMBLE DESTINÉS À L'ABSORPTION D'ÉNERGIE DE CONTRAINTES SE PRODUISANT LORS D'UN ÉVÉNEMENT DE SURCHARGE, AFIN D'ÉVITER TOUT DOMMAGE

(30) Priorität: 13.03.2014 DE 102014103462
(43) Veröffentlichungstag der Anmeldung: 18.01.2017
(73) Patentinhaber: General Dynamics European Land Systems - Mowag GmbH, 8280 Kreuzlingen (CH)
(72) Erfinder: BATTLOGG, Stefan, A-6771 St. Anton i.M. (AT); MAYER, Markus, A-6832 Sulz (Vorarlberg) (AT)
(74) Vertreter: BSB Patentanwälte Schütte & Engelen Partnerschaft mbB
(86) Internationale Anmeldenummer: PCT/EP2015/055364
(87) Internationale Veröffentlichungsnummer: WO 2015/136105

(56) Entgegenhaltungen:
- WO-A1-2011/141164
- US-A1- 2008 156 602
- US-A1- 2010 230 989

## Beschreibung

Die vorliegende Erfindung betrifft ein Verfahren zur Energieabsorption bzw. zur Dissipation von Energie zum Dämpfen von insbesondere auf eine Beladungseinheit zum Transport von Objekten bei einem Überlastereignis einwirkenden Belastungen zum Schutz der transportierten Objekte, wie Personen oder Gegenständen, vor Schäden. Ein solches einmaliges Überlastereignis mit einem Energieeintrag tritt bei einer Explosion einer Mine auf.

Es sind unterschiedliche Verfahren zur Energieabsorption zur Reduktion von Belastungen bei Überlastfällen, wie z. B. bei Explosionen unterhalb von gepanzerten Fahrzeugen, bekannt geworden, um die transportierten Objekte und insbesondere Personen und empfindliche Geräte zu schützen. Zum Schutz werden typischerweise mechanische Systeme eingesetzt, bei denen durch ein Umformen oder Aufreißen Energie absorbiert wird, um bei einem Überlastereignis Energie zu absorbieren und die Insassen entsprechend zu schützen. Ein Systeme zur Energieabsorption bei Explosionen offenbart unter anderem die US 2008/156602 A1.

Nachteilig daran ist allerdings, dass bei derartigen Systemen eine Steuerung der Dämpfung bzw. der Energieabsorption bei einem Überlastereignis mit unbekannter Impulsstärke und unbekanntem Impulsverlauf nicht möglich ist. Die Impulsstärke und die Impulsdauer von Minenexplosionen sind nicht vor der Explosion vorhersehbar, da die Art und Stärke der Mine, der Ort, die genaue Lage, die Tiefe im Boden und das die Mine umgebende Material bei einem realen Überlastereignis nicht vorbekannt ist. Eine Überwachung und Auswertung der Geschwindigkeit des Fahrzeugs oder sonstiger Parameter vor dem Eintritt des Überlastereignisses, also der Explosion einer Mine erlaubt keine Abschätzung der Stärke einer Explosion. Deshalb ist bei einem Überlastereignis im Sinne der vorliegenden Erfindung vor dem Eintritt des Überlastereignisses keine exakte Planung des Verlaufs der Energieabsorption möglich.

Mit der WO 2011/141164 A1 ist ein Regelverfahren für einen Energieabsorber einer Lenksäule bekannt geworden, bei dem mit einem Sensor die Relativgeschwindigkeit der zueinander beweglichen Teile des Energieabsorbers ermittelt wird. Anschließend wird der Energieabsorber so gesteuert, dass die Verzögerung einen möglichst konstanten und möglichst niedrigen Wert annimmt, sodass am Ende des Verfahrweges der zueinander beweglichen Teile des Energieabsorbers die Relativgeschwindigkeit annähernd 0 ist. Des Weiteren wird in dieser Druckschrift auch auf den möglichen Einsatz eines solchen Energieabsorbers an Sicherheitsgurtvorrichtungen, an Minenschutzsitzen, in Stoßstangen, in Werkzeugmaschinen, an Fangvorrichtungen für landende Flugzeuge auf Flugzeugträgern, und in Dämpfungssystemen für Hubschrauber sowie für Dämpfungssysteme in Schuhen hingewiesen. Ein solches Verfahren, bei der Energieabsorber so gesteuert wird, dass die Relativbewegung am Ende des Verfahrweges der zueinander beweglichen Teile des Energieabsorbers auf 0 abgebremst ist, kann nur durchgeführt werden, wenn die Randparameter vorbekannt sind. Fährt ein Fahrzeug auf einer Straße auf ein davor fahrendes Auto auf, so ist die Relativgeschwindigkeit direkt bekannt und es kann der vollständige Hub optimal genutzt werden, um die Relativbewegung gezielt abzubremsen. Das gilt auch für Fangvorrichtungen bei der Landung eines Flugzeugs auf einem Flugzeugträger und selbst beim Absturz eines Hubschraubers, bei dem die Fallhöhe und die Fallgeschwindigkeit vorbekannt sind.

In allen Anwendungen wird jeweils der maximale Verfahrweg optimal ausgenutzt, um eine möglichst geringe Belastung z. B. beim Crash eines Autos zu ermöglichen, sodass der Fahrer beim Aufprall auf die Lenksäule möglichst geringen Belastungen ausgesetzt wird. Ein solches System funktioniert gut bei der Regelung des Energieabsorbers an Lenksäulen oder bei anderen Anwendungen, bei denen die auftretenden Geschwindigkeiten und somit Belastungen bekannt sind und dementsprechend der verfügbare Verfahrweg mit der vorhandenden Relativgeschwindigkeit korreliert werden kann.

Bei der Anwendung bei z. B. Minenschutzsitzen, bei denen bei einem Überlastereignis, wie einer Minenexplosion unter einem gepanzerten Fahrzeug, es nicht bekannt ist, welche Stärke die Explosion hat, führt eine solche Regelung zu den gewünschten Ergebnissen, wenn eine schwache Explosion vorliegt. Die auftretenden Kräfte können gedämpft an den Körper einer auf dem Minenschutzsitz sitzenden Person weitergegeben werden. Die Belastung kann erheblich verringert werden. Die Verzögerung bzw. die Relativgeschwindigkeit wird dabei so eingestellt, dass über dem Verfahrweg eine konstante niedrige Belastung vorliegt.

Dies Verfahren setzt voraus, dass die Anfangsbedingungen und die Randbedingungen bekannt sind. Bei äußeren Einflüssen, deren Stärke und Dauer zunächst unbekannt sind, kann die Anwendung zu entsprechend unerwarteten Ergebnissen führen, sodass zu wenig oder zu stark gedämpft wird.

Es ist deshalb die Aufgabe der vorliegenden Erfindung, ein Verfahren und eine Baugruppe zum Dämpfen zur Verfügung zu stellen, womit eine bessere Steuerung bei Überlastereignissen möglich ist, bei denen bei Eintritt des Überlastereignisses nicht alle zur optimalen Steuerung benötigten Daten vorhanden sind.

Diese Aufgabe wird gelöst durch ein Verfahren zum Dämpfen mit den Merkmalen des Anspruchs 1 und durch eine Baugruppe mit den Merkmalen des Anspruchs 15. Bevorzugte Weiterbildungen der Erfindung sind in den Unteransprüchen angegeben. Weitere Vorteile und Merkmale ergeben sich aus der allgemeinen Beschreibung und aus der Beschreibung der Ausführungsbeispiele.

Ein erfindungsgemäßes Verfahren dient zum Absorbieren von Energie bei einem Überlastereignis und wird insbesondere mit einem Energieabsorber durchgeführt. Durch die Energieabsorption werden bei einem Überlastereignis Belastungen auf ein auf einer Beladungseinheit transportiertes Objekt reduziert.

Der Energieabsorber ist dabei insbesondere geeignet, bei einem einmaligen Überlastereignis mit einem derart hohen Energieeintrag, bei dem ohne Energieabsorber ein Schaden an dem Objekt wahrscheinlich oder überwiegend wahrscheinlich oder sogar nahezu sicher oder sicher wäre, Energie zu absorbieren, um durch die Energieabsorption des Energieabsorbers bei dem Überlastereignis eine resultierende Belastung auf ein bzw. das Objekt zu reduzieren und um insbesondere einen Schaden an dem Objekt zu vermeiden. Alternativ formuliert ist der Energieabsorber vorzugsweise geeignet, bei einem einmaligen Überlastereignis mit einem derart hohen Energieeintrag, bei dem ohne Energieabsorber auf das transportierte Objekt einwirkende Belastungen einen zulässigen Grenzwert überschreiten würden, Energie zu absorbieren, um durch die Energieabsorption des Energieabsorbers bei dem Überlastereignis eine einwirkende Belastung auf das Objekt zu reduzieren.

Bei dem erfindungsgemäßen Verfahren werden insbesondere mit einer Sensoreinrichtung vorzugsweise periodisch Messwerte über den aktuellen Zustand der Beladungseinheit erfasst. Dabei erkennt eine Steuereinrichtung aus den erfassten Messwerten ein Überlastereignis und eine Dämpfung des Energieabsorbers wenigstens direkt nach der Erkennung des Überlastereignisses auf einen erheblichen Wert und insbesondere einen hohen Wert näher an einem maximalen Wert als an einem minimalen Wert der möglichen Dämpfung eingestellt. Diese auf den erheblichen oder hohen Wert eingestellte Dämpfung wird für eine vorgegebene Zeitspanne beibehalten. Die Dämpfung ist vorzugsweise konstant, kann gegebenenfalls aber nicht konstant sein. Die Dämpfung kann natürlichen oder stochastischen Schwankungen unterworfen sein, wenn z. B. versucht werden sollte, einen konstanten Wert zu vermeiden. Jedenfalls verbleibt die Dämpfung während der vorgegebenen Zeitspanne etwa bei dem erheblichen und insbesondere hohen Wert. Die vorgegebene Zeitspanne ist so bemessen, dass während dieser vorgegebenen Zeitspanne eine Mehrzahl aufeinanderfolgender Messwerte erfasst wird. Der Energieabsorber und/oder die Dämpfung wird nach der vorgegebenen Zeitspanne in Abhängigkeit von den während des Überlastereignisses erfassten Messwerten gesteuert. Dadurch wird die Belastung für auf der Beladungseinheit transportierte Objekte während der vorgegebenen Zeitspanne zunächst bis zu einer vorgegebenen Grenzbelastung erhöht und nach der vorgegebenen Zeitspanne wird die Dämpfung in Abhängigkeit von den während des Überlastereignisses erfassten Messwerten gesteuert.

Die vorgegebene Zeitspanne ist insbesondere länger als 1 ms und vorzugsweise länger als 3 ms und kann 4 ms, 5 ms, 6 ms, 7 ms und mehr betragen.

Das Verfahren kann so durchgeführt werden, dass eine Dämpfung des Energieabsorbers wenigstens direkt nach der Erkennung des Überlastereignisses auf den hohen Wert eingestellt und später reduziert wird, um die Belastung für auf der Beladungseinheit transportierte Objekte zunächst bis zu einer vorgegebenen Grenzbelastung zu erhöhen und dann zu reduzieren. Die Reduktion erfolgt insbesondere, damit die Grenzbelastung nicht überschritten wird.

Bei dem Verfahren wird der bei dem Überlastereignis einwirkende Impuls bzw. dessen Energie absorbiert oder umgewandelt, um durch die Energieabsorption bzw. Dissipation von Energie bzw. Energieumwandlung des Energieabsorbers bei dem Überlastereignis eine resultierende Belastung auf ein bzw. das Objekt bzw. zu transportierende Objekt zu reduzieren und einen Schaden an dem Objekt zu vermeiden.

Das erfindungsgemäße Verfahren hat viele Vorteile. Ein erheblicher Vorteil besteht darin, dass direkt nach der Erkennung des Überlastereignisses die Dämpfung auf einen hohen und insbesondere einen vorgegebenen hohen Wert eingestellt wird. Möglich ist es auch, dass der vorgegebene hohe Wert zuvor eingestellt wird. Möglich ist es z. B., dass der hohe Wert einer Grundeinstellung entspricht, der aktiv reduziert werden muss. Der hohe Wert der Dämpfung liegt dabei näher an dem maximalen Dämpfungswert als an dem minimalen Dämpfungswert. Insbesondere beträgt ist der hohe Wert der Dämpfung wenigstens doppelt oder viermal so weit von dem minimalen Dämpfungswert entfernt wie von dem maximalen Dämpfungswert. Dadurch findet zunächst während der vorgegebenen Zeitspanne nur eine geringe Energieabsorption statt, sodass die mögliche Energieabsorption im Wesentlichen oder nahezu vollständig oder vollständig für den Zeitraum nach der vorgegebenen Zeitspanne aufgespart wird.

Dieser hohe Wert wird nach Erkennung des Überlastereignisses zunächst etwa oder wenigstens im Wesentlichen oder genau beibehalten. Das führt dazu, dass die Wirbelsäule eines auf der z. B. als Sitzeinrichtung ausgeführten Beladungseinheit sitzenden Benutzers durch den bei einer Minenexplosion auftretenden Schock zunächst vorgespannt wird, da der Energieabsorber auf einen hohen und z. B. maximalen Wert eingestellt wird. Dabei wird eine Relativbewegung des Energieabsorbers im Wesentlichen unterdrückt. Dadurch kann die Belastung der Wirbelsäule besser reguliert werden, da die zuvor ungespannte Wirbelsäule zunächst vorgespannt werden kann. Es wird die Belastung zunächst bis zu einer vorgegebenen Grenzbelastung erhöht. Anschließend wird die Belastung etwa bei der vorgegebenen Grenzbelastung beibehalten. Danach wird die Dämpfung des Energieabsorbers reduziert, sodass eine Relativbewegung der Beladungseinheit bzw. Sitzeinrichtung relativ zu einem Gestell oder einer Karosserie eines Transportmittels erfolgen kann. Dadurch wird erreicht, dass die Belastung der Wirbelsäule eines auf der Beladungseinheit sitzenden Benutzers nicht weiter über die vorgegebene Grenzbelastung hin erhöht wird, sondern konstant oder wenigstens näherungsweise konstant gehalten wird.

Durch dieses Verfahren wird das Verletzungsrisiko eines Benutzers als zu transportierendem Objekt deutlich reduziert. Bei konventionellen mechanischen Systemen wird hingegen sofort Energie durch das mechanische System absorbiert, bis das mechanische System an einen harten Anschlag gerät. Dann können auf die Wirbelsäule eines Benutzers schlagartig unzulässig hohe Belastungen abgegeben werden. Das erfindungsgemäße Verfahren funktioniert hingegen umgekehrt: zunächst wird keine Energie absorbiert und die Wirbelsäule eines Benutzers als Objekt vorgespannt und anschließend erfolgt die Energieabsorption an dem Energieabsorber, da die Dämpfung von dem ursprünglich hohen Dämpfungswert reduziert wird.

Außerdem wird durch das erfindungsgemäße Verfahren der mögliche Verfahrweg für besonders schwere Überlastereignisse optimal genutzt. Der Verfahrweg steht nach der Vorspannung der beteiligten mechanischen Komponenten noch voll zur Verfügung. Zu den beteiligten mechanischen Komponenten gehören z. B. die mechanisch verformbare Aufhängung der Sitzeinrichtung. Meist ist eine solche Sitzeinrichtung mit einem Polster auf der Sitzfläche und/oder mit einer gefederten Sitzfläche ausgerüstet, um den Komfort auch im normalen Betrieb zu erhöhen. Des Weiteren kann auch die Wirbelsäule einer darauf sitzenden Person dazu gezählt werden. Erst wenn die beteiligten mechanischen Komponenten vorgespannt sind, greift die Steuereinrichtung steuernd oder regelnd ein.

Bei der Erfindung wird in allen Fällen die Dämpfung nach der Erkennung eines Überlastereignisses auf einen hohen Wert näher an einem maximalen Wert als an einem minimalen Wert eingestellt. Unter einem maximalen Wert der Dämpfung wird dabei ein solcher Wert verstanden, bei dem (zumindest gerade noch) keine Relativbewegung von zur Energieabsorption zueinander beweglichen Teilen des Energieabsorbers stattfindet. Eine Vergrößerung der Kraft hat ab diesem Wert keine weitere Funktion mehr. Bei einer Verringerung würde hingegen eine Relativbewegung von zur Energieabsorption zueinander beweglichen Teilen des Energieabsorbers stattfinden. Vorzugsweise wird der hohe Wert der Dämpfung so eingestellt, dass dabei wenigstens zunächst keine Relativbewegung von zur Energieabsorption zueinander beweglichen Teilen des Energieabsorbers stattfindet.

In allen Ausgestaltungen ist die Beladungseinheit insbesondere als Sitzeinrichtung ausgeführt und dient insbesondere zum Transport von Personen als Objekten. Möglich ist es aber auch, dass Lasten oder Tiere oder empfindliche Geräte oder sonstige Gegenstände transportiert werden. Bei einer Ausgestaltung als Sitzeinrichtung entspricht die Aufnahmeeinheit der Beladungseinheit der Sitzfläche und mit der Trägereinrichtung wird die Sitzeinrichtung an dem Transportmittel befestigt. Vorzugsweise wird die Beladungseinheit möglichst weit oben an dem Transportmittel befestigt. Die Beladungseinheit kann an dem Dach oder einem oberen Bereich der Seitenwand des Transportmittels befestigt sein.

Unter einem Schaden an einem Objekt im Sinne der vorliegenden Anmeldung wird ein Zustand verstanden, in welchem das Objekt wenigstens vorübergehend in einer als nachteilig bewerteten, nicht wünschenswerten Weise verändert wird oder ist. Das kann einer vorübergehender Schaden sein. Möglich ist auch ein bleibender oder sogar irreparabler Schaden.

Bei Personen als Objekten ist ein Schaden eine gesundheitliche Beeinträchtigung. Ein bleibender Schaden bedeutet bei Personen wenigstens eine längerfristige und deutliche Beeinträchtigung des Wohlbefindens. Ein Schaden an einem Gegenstand oder einem Gerät kann vorübergehend sein, ist aber insbesondere länger andauernd und kann auch ein bleibender Defekt sein, wie ein Bruch eines Bauteils.

Vorzugsweise leitet die Steuereinrichtung periodisch aus den Messwerten charakteristische Kennwerte für eine Belastung der Beladungseinheit bzw. der Sitzeinrichtung ab. Es ist auch möglich und bevorzugt, dass die Steuereinrichtung aus den Messwerten periodisch charakteristische Kennwerte für eine Belastung eines Objekts und insbesondere einer Wirbelsäule eines Benutzers ableitet. Insbesondere werden die charakteristischen Kennwerte aus den Messwerten ermittelt, die die Beschleunigung der Beladungseinheit wenigstens annähernd wiedergeben. Beispielsweise können Weg-Messsensoren vorgesehen sein, die in kurzen zeitlichen Abständen die jeweilige Position erfassen und aus dem bekannten zeitlichen Abstand zwischen zwei Messungen die auftretende Beschleunigung ableitet. Möglich ist es auch, dass Weg- und/oder Kraft- und/oder Beschleunigungssensoren einzeln oder in Kombination berücksichtigt werden.

In einfachen Fällen ist an der Beladungseinheit wenigstens eine Schereinrichtung vorgesehen, die abgeschert wird, wenn die auf die Beladungseinheit einwirkende Belastung ein vorbestimmtes Maß überschreitet. Eine solche Schereinrichtung hat den Vorteil, dass der von dem Energieabsorber zur Verfügung gestellte Hub vollständig erhalten bleibt, bis ein Überlastereignis auftritt. Dadurch steht bei einem Überlastereignis der vollständige Hub zur Verfügung, sodass auch sehr große Belastungen gedämpft und deren Energie absorbiert werden kann.

In bevorzugten Ausgestaltungen erkennt die Steuereinrichtung ein Überlastereignis, wenn ein Schersensor ein Abscheren der Schereinrichtung detektiert. Eine solche Ausgestaltung ist sehr einfach umzusetzen, da dass Abscheren einer Schereinrichtung wie beispielsweise eines Scherbolzens als Startpunkt für das Verfahren dienen kann. Beispielsweise werden mit der Sensoreinrichtung erst Messwerte periodisch aufgenommen, wenn der Schersensor ein Abscheren der Schereinrichtung detektiert hat. Das kann beispielsweise so erfolgen, dass ein Scherbolzen eine durchgehende elektrisch leitende Verbindung zur Verfügung stellt, deren Unterbrechung das Startsignal zur periodischen Erfassung von Messwerten initiiert.

Es ist bevorzugt, dass die Steuereinrichtung ein Überlastereignis erkennt, wenn ein charakteristischer Kennwert ein vorbestimmtes Maß überschreitet. Eine solche Ausgestaltung funktioniert sowohl mit einer Schereinrichtung als auch ohne den Einsatz einer Schereinrichtung. Bei dieser Ausgestaltung ist es möglich, dass die Steuereinrichtung ständig Messwerte der Sensoreinrichtung erfasst und das Überlastereignis anhand der Größe der abgeleiteten charakteristischen Kennwerte bestimmt. Überschreitet die gemessene oder die ermittelte Beschleunigung der Sitzeinrichtung eine gewisse Höhe, wird ein Überlastereignis erkannt.

Vorzugsweise wird die vor oder direkt nach Erkennung eines Überlastereignisses auf einen hohen Wert eingestellte Dämpfung nach Erkennung des Überlastereignisses für eine vorgegebene Zeitspanne entsprechend beibehalten.

In vorteilhaften Weiterbildungen wird die Dämpfung nach der vorgegebenen Zeitspanne auf eine geringere Dämpfung und/oder null reduziert und danach in Abhängigkeit von dem charakteristischen Kennwert verändert oder wieder vergrößert. Eine solche Verfahrensweise ermöglicht eine flexible und optimale Steuerung der Belastung einer auf der Sitzeinrichtung sitzenden Person bzw. eines Objekts auf einer Beladungseinheit. Im Schadensfall wird die Dämpfung zunächst so hart eingestellt, dass die zuvor unbelastete Wirbelsäule des Benutzers vorgespannt wird. Erst anschließend wird nach der vorgegebenen Zeit die Dämpfung reduziert, sodass eine Relativbewegung an dem Energieabsorber ermöglicht wird. Mit den fortlaufend gewonnenen Messwerten wird anschließend die Dämpfung des Energieabsorbers in Abhängigkeit von dem charakteristischen Kennwert wieder vergrößert und/oder wieder verkleinert. Dadurch kann bei vorgegebenem Hub des Energieabsorbers es möglichst sicher vermieden werden, dass das Objekt oder der Benutzer unzulässigen Kräften und Belastungen ausgesetzt wird.

In allen Ausgestaltungen ist es bevorzugt, dass der Energieabsorber nach Erkennung eines Überlastereignisses zunächst maximal gedämpft wird, um möglichst den maximalen Hub vorzuhalten.

Es ist möglich und bevorzugt, dass der Energieabsorber nach Erkennung eines Überlastereignisses oder nach Ablauf der vorgegebenen Zeitspanne zeitabhängig von dem jeweils aktuell abgeleiteten charakteristischen Kennwert gesteuert wird. Dadurch kann ein optimaler Verlauf eines Überlastereignisses ermöglicht werden.

Es ist möglich und bevorzugt, dass die Dämpfung des Energieabsorbers reduziert wird, wenn der charakteristische Kennwert eine vorgegebene zulässige Grenzbelastung für Objekte, Personen oder Geräte erreicht oder überschreitet.

In speziellen Ausgestaltungen wird die zulässige Grenzbelastung vorzugsweise für eine Standardperson vorgegeben. Es ist möglich und bevorzugt, dass die zulässige Grenzbelastung individuell für Objekte oder Benutzer eingestellt oder ermittelt wird.

Insbesondere ist es auch möglich, Sensorwerte einer an einem Objekt oder einer Person angeordneten Sensoreinheit zu berücksichtigen. Dabei können auch mehrere Sensoreinheiten Berücksichtigung finden, um die Zuverlässigkeit der Messwerte zu erhöhen und um mehr Parameter zu berücksichtigen.

In allen Ausgestaltungen wird die Beladungseinheit oder die Sitzeinrichtung vorzugsweise mit wenigstens einem Sensormittel gekoppelt, um beispielsweise das Gewicht eines transportierten Objekts oder einer transportierten Person und/oder eine Beschleunigung der Sitzeinrichtung zu ermitteln. Das Sensormittel ist insbesondere Teil der Sensoreinrichtung. Möglich ist auch der Einsatz von flächigen Sensormitteln, die auf der Sitzfläche der Beladungseinheit oder der Sitzeinrichtung mehrere über der Fläche verteilte Werte ermitteln. In allen Fällen wird vorzugsweise ein Energieabsorber mit einem magnetorheologischen Absorberventil eingesetzt, wobei die Stärke der Dämpfung des magnetorheologischen Absorberventils über eine Stärke eines an dem Absorberventil erzeugten Magnetfeldes gesteuert wird.

Eine erfindungsgemäße Baugruppe weist eine Beladungseinheit zum Transport von Objekten und wenigstens einen Energieabsorber zum Absorbieren von Energie bei einem Überlastereignis auf, um Belastungen auf ein auf einer Beladungseinheit transportiertes Objekt zu reduzieren. Der Energieabsorber ist geeignet und eingerichtet, bei einem einmaligen Überlastereignis mit einem derart hohen Energieeintrag, bei dem ohne Energieabsorber eine eine Grenzwert überschreitende Belastung und insbesondere ein Schaden an dem zu transportierenden Objekt wahrscheinlich und insbesondere überwiegend wahrscheinlich oder sogar nahezu sicher oder sicher wäre, Energie zu absorbieren, um durch die Energieabsorption des Energieabsorbers bei dem Überlastereignis bzw. während des Überlastereignisses eine resultierende Belastung auf ein zu transportierendes Objekt zu reduzieren und einen Schaden an dem Objekt zu vermeiden. Eine Steuereinrichtung und wenigstens eine Sensoreinrichtung sind zur Erfassung von Messwerten über den aktuellen Zustand der Beladungseinheit vorgesehen. Wenigstens der eine Energieabsorber ist vorgesehen. Der Energieabsorber ist mit den Messwerten durch die Steuereinrichtung steuerbar. Die Steuereinrichtung ist dazu eingerichtet und ausgebildet, aus den erfassten Messwerten ein Überlastereignis zu erkennen und eine Dämpfung des Energieabsorbers wenigstens direkt nach der Erkennung des Überlastereignisses auf einen erheblichen Wert und insbesondere einen hohen Wert näher an einem maximal einstellbaren Wert der Dämpfung als an einem minimal einstellbaren Wert der Dämpfung einzustellen und die Dämpfung für eine vorgegebene Zeitspanne wenigstens näherungsweise oder etwa beizubehalten. Diese vorgegebene Zeitspanne ist so bemessen, dass während dieser vorgegebenen Zeitspanne eine Mehrzahl aufeinanderfolgender Messwerte erfasst wird. Die Dämpfung wird nach der vorgegebenen Zeitspanne in Abhängigkeit von den während des Überlastereignisses erfassten Messwerten gesteuert bzw. ist steuerbar, um die Belastung für auf der Beladungseinheit transportierte Objekte während der vorgegebenen Zeitspanne zunächst bis zu einer vorgegebenen Grenzbelastung zu erhöhen und nach der vorgegebenen Zeitspanne in Abhängigkeit von den während des Überlastereignisses erfassten Messwerten zu steuern.

Auch die erfindungsgemäße Baugruppe hat viele Vorteile, da sie eine individuelle Steuerung des Energieabsorbers bei einem Überlastereignis ermöglicht. Die Sensoreinrichtung ist vorzugsweise an dem ungedämpften Teil der Baugruppe angeordnet.

Vorzugsweise ist wenigstens eine an einem Objekt und insbesondere an einer Person als Objekt anordnenbare Sensoreinheit vorgesehen, welche drahtgebunden oder drahtlos mit der Steuereinrichtung koppelbar ist. Vorzugsweise ist wenigstens ein Sensormittel vorgesehen und mit der Beladungseinheit gekoppelt, um ein Gewicht eines transportierten Objekts und/oder eine Beschleunigung der Beladungseinheit und/oder eine einwirkende Kraft zu ermitteln.

Der Energieabsorber verfügt vorzugsweise über wenigstens ein magnetorheologisches Absorberventil, dessen Dämpfung über eine Stärke eines auf das Absorberventil einwirkenden Magnetfeldes gesteuert wird.

In allen Fällen kann an der Beladungseinheit eine Schereinrichtung vorgesehen sein, die abscherbar ist, wenn die auf die Beladungseinheit einwirkende Belastung ein vorbestimmtes Maß überschreitet.

Das Verfahren zur Steuerung kann in allen Fällen programmierbar sein. Das Verfahren kann an unterschiedliche Rahmen oder Sitzrahmen angepasst werden. Die Regelung kann je nach Bedrohungsszenario und/oder Gefahrenpotential optimiert werden. Möglich ist auch eine variable Anpassung an die Einbausituation, z. B. wenn der mögliche Hub verändert wird oder wenn nachträglich Komponenten verändert oder angebaut werden.

In allen Ausgestaltungen wird die Dämpfung vorzugsweise über den Stromverlauf einer zur Magnetfelderzeugung vorgesehenen elektrischen Spule gesteuert. Zunächst wird dabei eine sehr hohe Kraft erzeugt, wodurch die Wirbelsäule einer Person als Objekt und gegebenenfalls vorhandene Sitzkissen und/oder Federn und dergleichen vorgespannt werden. Dadurch wird ein möglichst geringer Verfahrweg erreicht, bis das gesamte System vorgespannt ist und die Wirbelsäule eine bestimmte und vorgegebene Kraft erreicht hat. Danach erfolgt eine schnelle Kraftreduktion insbesondere kurz vor Erreichen der maximal zulässigen Wirbelsäulenkraft. Eine solche schnelle Kraftreduktion wird vorzugsweise durch Abschalten des anliegenden Stroms erzielt. Durch eine schnelle Kraftreduktion wird ein Überschwingen der Kraft bzw. der Belastung vermieden. Danach wird die Belastung bzw. die Wirbelsäulenkraft vorzugsweise aufrechterhalten, bis das erste Störereignis des Überlastereignisses beendet ist. Dadurch wird ein Durchschlagen des Systems in den meisten möglichen Fällen zuverlässig vermieden.

In allen Ausgestaltungen ist es möglich, dass zusätzlich eine Komfortfunktion zur Verfügung gestellt wird, bei der ein Teil des Hubes oder des Fahrweges des Energieabsorbers zur Federung und zur Dämpfung von kleineren Stößen zur Steigerung des Komforts verwendet wird. Möglicherweise kann dabei eine zentrale Steuerung erfolgen, wobei je nach der Bedrohungslage ein anstellbarerer Anteil des Gesamtweges für die Komfortfunktion zur Verfügung steht. Das bedeutet, dass bei einem hohen Gefahrenpotenzial der gesamte Fahrweg für Überlastfälle zur Verfügung steht, während in sicheren Situationen ein größerer Anteil des Verfahrweges für eine Komfortdämpfung zur Verfügung steht.

Ebenso ist es möglich, dass bei einer Ausgestaltung als Sitzeinrichtung eine Sitzhöhenverstellung ermöglicht wird. Dadurch kann beispielsweise kleineren oder leichteren Personen eine größere Sicherheit geboten werden, da mehr Verfahrweg zur Verfügung steht.

In allen Ausgestaltungen wird bei Personen als Objekten vorzugsweise nach der gemessenen oder abgeschätzten Wirbelsäulenkraft geregelt. Die auf die Wirbelsäule einwirkende Kraft sollte nicht größer als 4000 N sein.

In Weiterbildungen werden zwei aufeinanderfolgende und miteinander verbundene Störereignisse eines Überlastereignisses gedämpft. Beispielsweise ist das erste Störereignis einer Explosion die direkte Auswirkung, nämlich wenn das gepanzerte Fahrzeug zunächst durch die Explosion in die Luft geschleudert wird. Die Auswirkungen werden entsprechend gedämpft. Anschließend prallt das Fahrzeug wieder auf dem Boden auf. Das ist das zweite Störereignis des Überlastereignisses und wird ebenfalls gedämpft. Deshalb ist vorzugsweise eine automatische Rückstellung des Energieabsorbers in die Ausgangsposition vorgesehen.

In allen Fällen ist die Beladungseinheit insbesondere als Sitzeinrichtung von einem Fahrzeug oder Kraftfahrzeug ausgebildet. Die Sitzeinrichtung umfasst eine als Sitz ausgebildete Aufnahmeeinheit und eine als Sitzrahmen ausgebildete Trägereinrichtung. Dabei ist der Energieabsorber zwischen dem Sitz und dem Sitzrahmen angebracht.

Vorzugweise wird im Sinne der vorliegenden Erfindung ein einmaliges Überlastereignis als Explosion einer Mine angesehen. Insbesondere können im Sinne der vorliegenden Erfindung auch andere einmalige Überlastereignisse mit einem Energieeintrag angesehen werden, bei denen insbesondere aus vorangegangenen Messwerten eine Impulsstärke und Impulsdauer nicht abgeschätzt werden kann. Ein solches einmaliges Überlastereignis tritt z. B. auch bei einem Run-Off-Road-Unfall eines Fahrzeuges auf, wenn der Fahrer zum Beispiel die Kontrolle verliert und das Fahrzeug unvorhergesehen und unvorhersehbar z. B. eine Böschung oder dergleichen abstürzt und tiefer auf dem Gelände hart aufprallt. Bei derartigen Unfällen ist die Stärke des Energieeintrags bei dem Überlastereignis nicht aus der Geschwindigkeit des Fahrzeugs ableitbar, sondern hängt von der Fallhöhe ab, die aber nicht aus z. B. der Geschwindigkeit des Fahrzeugs abgeleitet werden kann.

Deshalb ist es mit der vorliegenden Erfindung auch möglich und bevorzugt die Insassen von Kraftfahrzeugen bei sogenannten "Run OFF-Road" Unfällen, auf welche z. B. in den USA ca. 50% der Verkehrstoten zurückgehen, zu schützen bzw. Belastungen zu reduzieren.

Ein Abkommen von Straßenfahrzeugen wie Autos, SUVs, LKWs usw. von der asphaltierten Straße aufgrund von Ablenkung, Müdigkeit und schlechten Witterungsbedingungen in unebenes Gelände tritt besonders häufig auf. Fahrzeuge mit einer Baugruppe nach dieser Erfindung verfügen vorzugsweise über eine Sitzkonstruktion mit einem Sitz und einem Sitzrahmen, bei der der zuvor beschriebene Energieabsorber die insbesondere vertikale bzw. im Wesentlichen vertikal wirkende Aufschlagenergie weitgehend absorbiert. Zur Vorbeugung von gefährlichen Wirbelsäulenverletzungen von Insassen befindet sich deshalb zwischen dem Sitz und dem Sitzrahmen wenigstens ein Energieabsorber, um die vertikalen Kräfte und/oder um die Kräfte parallel zur Sitzrückenlehne und/oder um die Kräfte rechtwinklig zur Sitzfläche abzufedern. Solche Kräfte entstehen bei einem harten (wenigstens teilweise vertikalen) Aufprall des Fahrzeugs abseits der Fahrbahn. Bei derartigen Überlastereignissen wirkt die zu absorbierende Aufschlagenergie zu einem erheblichen Teil oder weitgehend oder nahezu vollständig in vertikaler Richtung.

Die Erfindung ist primär nicht dafür vorgesehen, bei einem Frontalzusammenstoß Energie zu absorbieren. Für Frontalzusammenstöße in der Ebene sind bei Kraftfahrzeugen hingegen Knautschzonen oder Airbags des Fahrzeugs vorgesehen.

Die Höhe von vertikal wirkenden Belastungen bei Überlastereignissen und Unfällen beim Abkommen von der Straße oder die Stärke der vertikalen Belastungen bei Minenexplosionen können hingegen nicht aus Parametern vor dem Überlastereignis abgeleitet werden, da sie nicht nicht geschätzt oder gemessen werden können.

In allen Fällen kann der Energieabsorber vertikal, horizontal oder auch schräg eingebaut sein.

Beim Stand der Technik erkennt bei Kraftfahrzeugen hingegen ein Sensor, ob das Fahrzeug von der Fahrbahn abkommt und aktiviert entsprechende Sicherheitssysteme, wie den Gurtstraffer. Die Unfallschwere und eine daraus resultierende optimale Belastungsreduktion kann hieraus aber nicht abgeleitet werden. Wichtig ist, was nach dem Abkommen von der Fahrbahn mit dem Fahrzeug passiert, wo und wie landet es bzw. mit welcher Art von Untergrund es Kontakt hat und in welcher Raumlage sich das Fahrzeug beim Aufprall befindet. Bei dem erfindergemäßen Verfahren wird auf diesen relevanten Aufprall/Impuls wie zuvor und nachfolgend beschrieben reagiert, was eine wesentliche Optimierung bzw. Verletzungsreduktion gegenüber dem Stand der Technik zur Folge hat.

Weitere Vorteile und Eigenschaften der vorliegenden Erfindung ergeben sich aus der Beschreibung der Ausführungsbeispiele, die mit Bezug auf die beiliegenden Figuren im Folgenden erläutert werden.

In den Figuren zeigen:
- Fig. 1: eine schematische perspektivische Ansicht einer erfindungsgemäßen Baugruppe;
- Fig. 2: einen Vorderansicht der Baugruppe nach Fig. 1;
- Fig. 3: eine Seitenansicht im Schnitt der Baugruppe nach Fig. 1 im Dämpfungszustand;
- Fig. 4: einen Vorderansicht der Baugruppe nach Fig. 1 im Schnitt im Ruhezustand;
- Fig. 5: ein Fahrzeug mit erfindungsgemäßen Baugruppen zum Schutz der Insassen bei Explosionen;
- Fig. 6: einen zeitlichen Ablauf einer Dämpferkraft der Baugruppe nach Fig. 1 bei einem Überlastereignis; und
- Fig. 7: ein schematisches Ablaufdiagramm der Steuerung der Baugruppe bei dem Überlastereignis nach Fig. 6.

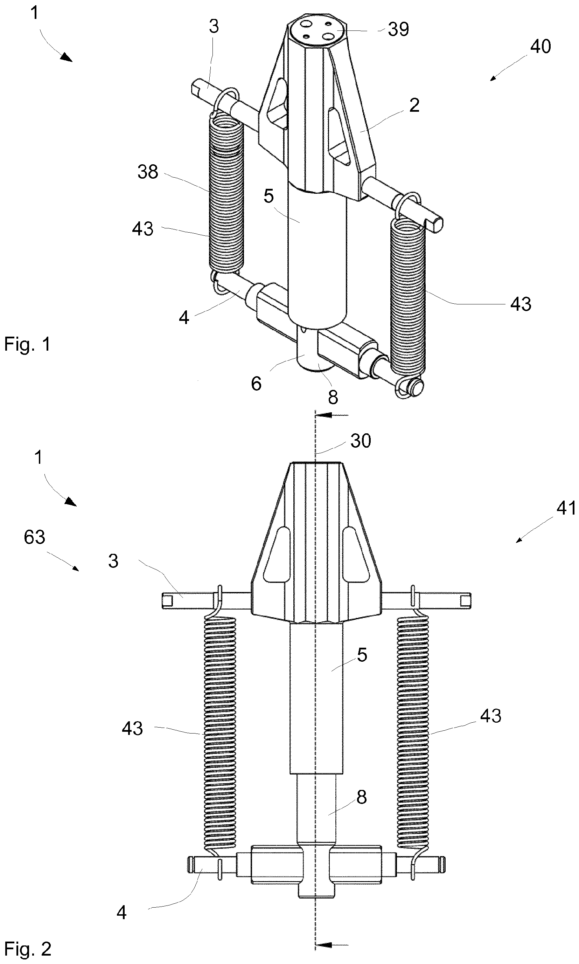

In Fig. 1 ist eine schematische perspektivische Ansicht einer erfindungsgemäßen Baugruppe 1 dargestellt. Die Baugruppe umfasst einen Absorberzylinder 5 an dessen einem Ende eine Befestigungseinrichtung 3 und an dessen anderem Ende eine Halteeinrichtung 4 vorgesehen sind. Die Halteeinrichtung 4 und die Befestigungseinrichtung 3 weisen hier jeweils zwei seitlich abstehende Arme auf, an denen jeweils eine Vorspannfeder 43 einer Vorspanneinrichtung 38 angeordnet ist, um die Baugruppe 1 nach einem Überlastereignis 63 wieder in den Ruhezustand 40 zu überführen, der auch in Figur 1 dargestellt ist.

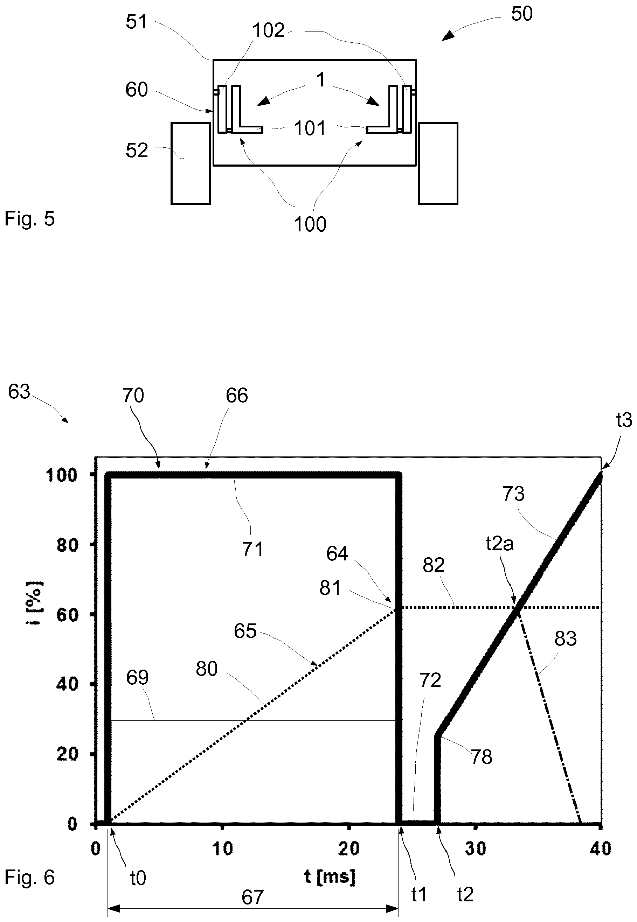

Die Baugruppe 1 dient zur Energieabsorption bzw. zur Dämpfung von Relativbewegungen zwischen der Befestigungseinrichtung 3 und der Halteeinrichtung 4. Die Halteeinrichtung 4 ist dazu mit der Kolbeneinrichtung 6 des Energieabsorbers 2 verbunden, während die Befestigungseinrichtung 3 fest mit dem Absorberzylinder 5 verbunden ist. Am oberen Ende ist hier ein Abschlussdeckel 39 zu sehen, der die hier im Inneren verborgene zweite Kammer der Absorberkammer 9 nach außen hin abschließt und begrenzt. Die Baugruppe 1 wird insbesondere an einer Beladungseinheit 100 zwischen einer Aufnahmeeinheit 101 und einer Trägereinrichtung 102 eingesetzt (vgl. Fig. 5).

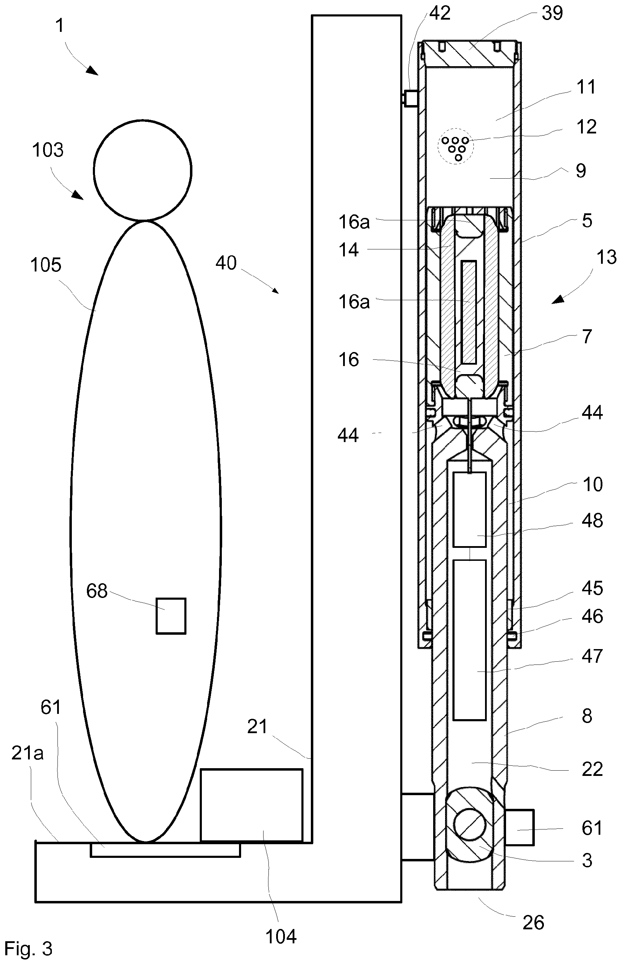

Figur 2 zeigt die Baugruppe 1 in einer Vorderansicht. Durch den Absorberzylinder 5 erstreckt sich zentral eine Symmetrieachse 30, durch welche der Schnitt nach Figur 3 verläuft.

Figur 3 zeigt den Schnitt nach Figur 2 in einem Ruhezustand 40. Zusätzlich eingezeichnet ist schematisch eine Sitzeinrichtung 21 als Beladungseinheit 100 dargestellt. Die Beladungseinheit 100 weist eine Aufnahmeeinheit 101 bzw. eine Sitzfläche 21a auf, auf der sich ein Objekt 103 wie z. B. eine Person 105 wie beispielsweise ein Soldat in einem Truppentransporter setzen kann.

Im Inneren des Absorberzylinders 5 ist im Schnitt der Absorberkolben 7 und die damit verbundenen Kolbenstange 8 der Kolbeneinrichtung 6 erkennbar. Der Absorberkolben 7 teilt die im Inneren des Absorberzylinders 5 vorhandene Absorberkammer 9 in eine erste Kammer 10 und eine zweite Kammer 11. Die zweite Kammer 11 wird nach außen durch den Abschlussdeckel 39 begrenzt und hier luftdicht abgeschlossen.

Im Ruhezustand ist die erste Kammer 10 wenigstens teilweise und insbesondere vollständig mit Absorberfluid 12 gefüllt. Bei Eintreten eines Überlastereignisses 63 wird die Kolbenstange 8 aus dem Absorberzylinder 5 herausgezogen, sodass das in der ersten Kammer 10 vorhandene Absorberfluid 12 durch den Absorberkanal 14 in dem Absorberkolben 7 durchtritt und in die zweite Kammer 11 übertritt. Die zweite Kammer 11 kann im Ruhezustand schon zu einem gewissen Teil mit dem Absorberfluid 12 gefüllt sein. Es kann aber auch sein, dass die zweite Kammer 11 im Ruhezustand nur wenig oder gar nicht mit Absorberfluid 12 gefüllt ist, sondern nur mit Luft oder einem anderen kompressiblen Gas oder Medium.

Klar erkennbar ist, dass die Kolbenstange 8 einen sehr großen Durchmesser aufweist, sodass für die erste Kammer 10 nur ein relativ schmaler Ringspalt um die Kolbenstange herum verbleibt. Dadurch wird beim Ausfahren des Absorberkolbens 7 nur ein relativ geringes Volumen des Absorberfluids 12 aus der ersten Kammer 10 verdrängt. Deshalb sind die Strömungsgeschwindigkeiten des Absorberfluids 12 in dem Absorberkanal 14 auch bei durch Explosionen hervorgerufenen Überlastfällen 63 gering, sodass die Länge des Absorberkolbens 7 ausreicht, um durch das Magnetfeld der elektrischen Spule als Felderzeugungseinrichtung 16 die Strömung wie gewünscht zu beeinflussen.

Bei der Überleitung des Strömungsfluids 12 von der ersten Kammer 10 in die zweite Kammer 11 wird das Absorberfluid 12 durch die sich von außen radial schräg nach innen erstreckenden radialen Strömungsöffnungen 44 nach innen hin umgeleitet. Das bedeutet, dass der Strömungskanal bzw. der Absorberkanal 14 radial weiter innen angeordnet ist als die erste Kammer 10. Dadurch kann das Innere des Absorberkolbens 7 effektiv zur Erzeugung des nötigen Magnetfeldes und für den Absorberkanal 14 verwendet werden.

Die Kolbenstange 8 ist hier erheblich dicker ausgeführt, als es für die Stabilität nötig wäre. Deshalb ist in der Kolbenstange 8 ein Hohlraum 22 vorgesehen, der hier als Sackloch ausgeführt ist. Das Sackloch 22 erstreckt sich von dem dem Kolben gegenüberliegenden Ende 26 aus in die Kolbenstange 8 hinein. Der Hohlraum 22 kann sich bis kurz vor den Absorberkolben 7 hin erstrecken, sodass sich die Länge des Hohlraums 22 über dreiviertel oder mehr der Länge der Kolbenstange 8 bis hin zum Absorberkolben 7 erstreckt. Der Hohlraum 22 kann entsprechend genutzt werden. Hier sind im Inneren des Hohlraums 22 die Steuereinrichtung 48 und ein Energiespeicher 47 angeordnet. Die Steuereinrichtung 48 ist mit der elektrischen Spule 16 verbunden, um diese zu steuern. Des Weiteren ist die Steuereinrichtung 48 mit einer Sensoreinrichtung 61 verbunden, um die Belastungen der als Sitzeinrichtung 21 ausgeführten Beladungseinheit 100 aufzunehmen und zu verarbeiten.

Durch den Energiespeicher 47 wird sichergestellt, dass auch bei einem Stromausfall an Bord des Transportmittels jederzeit die Baugruppe 1 die genügende Energie zur Steuerung des Energieabsorbers 2 bereithält. Der Energiespeicher kann ein Kondensator oder ein Akku sein.

Der Absorberkolben 7 trennt hier nicht nur die erste Kammer 10 von der zweiten Kammer 11, sondern bildet auch ein Strömungsventil 13, welches durch die Steuereinrichtung 48 steuerbar ist.

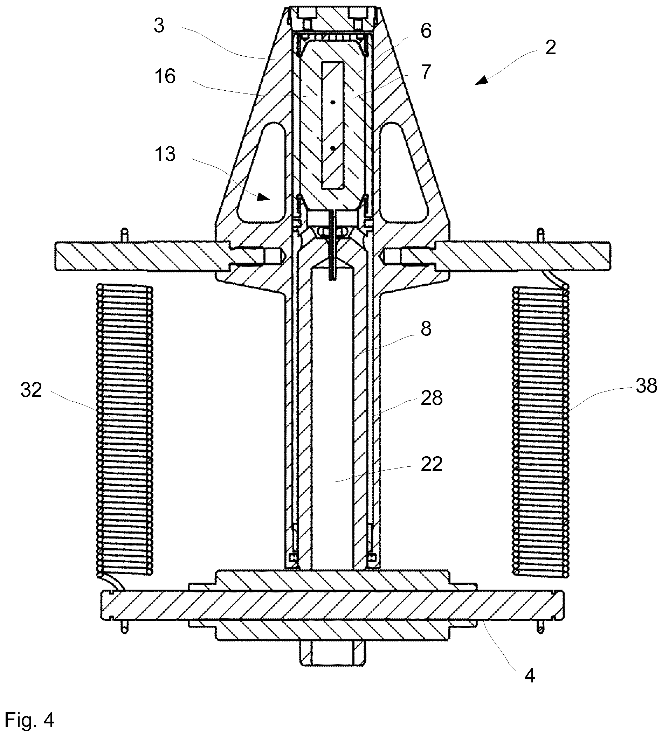

In Figur 4 ist ein weiterer Querschnitt durch die Baugruppe 1 dargestellt, wobei hier auch die Vorspanneinrichtung 38 als Rückstelleinrichtung 32 im Schnitt dargestellt ist. Der Übersichtlichkeit halber wurden der Energiespeicher 47 und die Steuereinrichtung 48 in dem Hohlraum 22 hier nicht dargestellt. Die erste Kammer 10 bildet einen Ringraum 28 um die Kolbenstange 8 herum. Dabei ist eine radiale Erstreckung des Ringraums 28 kleiner als eine Wandstärke der hohlen Kolbenstange 8.

Figur 5 zeigt eine schematische Darstellung eines Transportmittels 50 wie eines Truppentransporters, an dem erfindungsgemäße Baugruppen 1 zum Schutz der Insassen bei Explosionen vorgesehen sind. Das Transportmittel 50 weist eine Karosserie 51 auf, an der Minenschutzsitze 60 als Baugruppen 1 befestigt sind. Das Fahrzeug 50 ist über Räder mit Reifen 52 fahrbar. Bei einem Überlastereignis 63, wie beispielsweise einer Explosion wird das Fahrzeug 50 in die Luft geschleudert, wobei eine gedämpfte Bewegung der hier als Sitzeinrichtung 21 ausgeführten Beladungseinheit 100 der Baugruppen 1 erfolgt, um die darauf sitzenden Personen vor bleibenden Schäden zu bewahren.

Figur 6 zeigt den zeitlichen Verlauf 70 der relativen eingestellten Stromstärke des Energieabsorbers 2 bei einem Überlastereignis 63. Ein solches Überlastereignis tritt z. B. ein, wenn ein gepanzerter Truppentransporter über eine Landmine fährt und diese explodiert.

Das Überlastereignis 63 wird z. B. detektiert, wenn der Scherbolzen der Schereinrichtung 42 abgeschert wird, weil die darauf einwirkende Belastung die Scherkraft übersteigt. Dadurch wird der elektrisch leitende Kontakt durch die Schereinrichtung 42 aufgehoben, was von der Steuereinrichtung 48 detektiert wird. Daraufhin wird ein entsprechender Steuerungsablauf aktiviert. Dieser Zeitpunkt wird mit t0 bezeichnet.

Alternativ oder zusätzlich kann auch eine andere Überlastereignis-Erkennungsroutine in der Steuereinrichtung 48 ablaufen. Die Steuereinrichtung 48 kann auch die jeweils aktuellen Messwerte der Sensoreinrichtung 61 und der Sensoreinheit 68 und auch von weiteren Sensormitteln in bestimmten zeitlichen Abständen abfragen und auswerten, um aus einem einzigen Messwert eines Sensors oder mehreren Messwerten eines Sensors oder aus mehreren Messwerten verschiedener Sensoren einen Kennwert 65 periodisch abzuleiten. Der Kennwert 65 kann z. B. alle 10 ms oder auch in anderen geeigneten Zeitabständen ermittelt werden. Nach Erkennung eines Überlastereignisses 63 wird vorzugsweise ein kleinerer Zeitabstand gewählt.

Zum Zeitpunkt t0 wird die elektrische Spule 16 direkt mit einem hohen elektrischen Strom beaufschlagt. Insbesondere wird die elektrische Spule 16 direkt mit dem maximal möglichen Strom beaufschlagt, um den Energieabsorber 2 möglichst direkt zu blockieren. Das durch die elektrische Spule 16 erzeugte Magnetfeld verkettet die magnetorheologischen Partikel in dem magnetorheologischen Absorberfluid 12 innerhalb des Absorberkanals 14. Um das Absorberfluid 12 durch den Absorberkanal 14 zu pressen, muss die einwirkende Kraft so groß sein, dass die verketteten magnetorheologischen Partikel (reversibel) abscheren. Die maximale Kraft ist deshalb so eingestellt, dass sie in der Regel auch bei einem Überlastereignis ausreicht, um eine Relativbewegung der Halteeinrichtung 4 relativ zu der Befestigungseinrichtung 3 zu unterbinden. Die Stromstärke verbleibt bei 100% für eine voreingestellte Zeitdauer 67. Die Länge der vorgegebenen Zeitspanne 67 kann voreingestellt werden, kann aber auch z. B. anhand des Gewichtes der auf der Sitzeinrichtung 21 sitzenden Person 105 variiert werden. Möglich ist es auch, dass das Gewicht eines Gerätes 104 als Objekt 103 erfasst und berücksichtigt wird. Darüber kann bei einer gemessenen Beschleunigung die wirkende Kraft ermittelt werden. In vielen Fällen darf eine zulässige Maximalkraft nicht überschritten werden. Die Kraft berechnet sich aus dem Produkt aus Beschleunigung und Masse.

Die vorgegebene Zeitspanne 67 wird vorzugsweise aufgrund von Messungen, Berechnungen und Erfahrungswerten so gewählt, dass innerhalb dieser Zeitspanne 67 die Rückenbelastung oder Wirbelsäulenbelastung einer typischen Person im Schadensfalle bzw. Überlastereignis 63 nicht überschritten wird. Die zuvor unbelastete Wirbelsäule einer auf der Sitzeinrichtung 21 sitzenden Person 105 wird dann bei einem Überlastereignis 63 vorgespannt. Ebenso werden etwaige Federn oder Kissen der Sitzeinrichtung 21 und auch mechanische Bauteile mit Federwirkung vorgespannt. Werden Gegenstände 104 transportiert, wird dies entsprechend berücksichtigt, damit empfindliche Geräte geschützt transportiert werden können.

Nach der Zeitspanne 67 kann die Belastung der Person zum Zeitpunkt t1 die maximal vorgesehene Belastungsgrenze 81 erreicht haben. Gleichzeitig wird hier auch die Grenzbelastung 64 erreicht, die nicht überschritten werden soll. Um eine optimale Steuerung zu erreichen, wird die Stromstärke der elektrischen Spule 16 dann stark auf einen reduzierten Wert 72 gesenkt. Insbesondere wird die die Stromstärke der elektrische Spule 16 schlagartig auf null abgesenkt. Dadurch wird ein Überschwingen des Belastungsverlaufs 80 verhindert.

Der zuvor zunächst steil ansteigende Belastungsverlauf 80 erreicht ein Plateau 82. Jetzt erlaubt der Energieabsorber 2 eine Relativbewegung der Sitzeinrichtung 21 zur Karosserie 51 des Fahrzeugs 50. Zum Zeitpunkt t2 wird die Stromstärke zunächst auf den Wert 78 erhöht und ab da erfolgt hier ein rampenartiger Stromverlauf der elektrischen Spule 16. Die Dämpfung nimmt entsprechend zu, sodass die Bewegungsgeschwindigkeit des Absorberkolbens 7 reduziert und die Belastung auf dem hohen Plateau 82 verbleibt. Durch dieses Verfahren wird die Belastung jederzeit so hoch gehalten, wie sie zulässig ist. Damit wird gewährleistet, dass jederzeit noch die größtmöglichen Reserven vorhanden sind, um das Überlastereignis ohne bleibende Schäden für die auf einem Minenschutzsitz sitzende Person zu dämpfen. Fährt ein Energieabsorber bzw. Dämpfer auf Anschlag, steigt die Belastung schlagartig an und kann weiter über zulässige Grenzen ansteigen. Die Erfindung senkt Verletzungsrisiken erheblich. Zum Zeitpunkt t3 ist das Überlastereignis hier beendet und der Strom wird wieder abgeschaltet.

In dem Zeitintervall ab dem Zeitpunkt t1 erfolgt hier eine geregelte Steuerung der Dämpfung. Dazu werden die Messwerte der Sensoren 61 und 68 periodisch abgefragt. Aus den Messergebnissen wird periodisch ein Kennwert 65 abgeleitet, der zur weiteren Steuerung herangezogen wird. Aus dem Kennwert 65 wird eine aktuelle Belastung ermittelt, wenn denn der Kennwert nicht direkt die aktuelle Belastung wieder gibt. Anhand der aktuellen Belastung wird die Stromstärke so gesteuert, dass die Belastung möglichst kurz unterhalb der Grenzbelastung 64 verbleibt und diese möglichst nicht überschreitet.

Wenn erkannt wird, dass das Maximum der Belastung des Überlastereignisses 63 überschritten wurde, kann die Dämpfung auch weicher eingestellt werden, um den Komfort zu erhöhen.

Zusätzlich eingezeichnet ist in Figur 6 eine strichpunktierte Linie 83, die einen anderen Belastungsverlauf wiedergibt. Auch der Verlauf der Linie 83 beginnt zum Zeitpunkt t0 mit der Erkennung eines Überlastereignisses 63. Die Stromstärke wird wieder auf 100% erhöht und zum Zeitpunkt t1 auf null reduziert. Zum Zeitpunkt t2 wird die Stromstärke auf den Wert 78 erhöht und anschließend bis zum Zeitpunkt t2a rampenartig (73) erhöht. Danach sinkt die Belastung, sodass die Dämpfung weicher eingestellt werden und die Stromstärke reduziert werden kann.

In einer Variante wird der Kennwert 65 zumindest ab dem Zeitpunkt t0 periodisch auch während der vorgegebenen Zeitspanne 67 jeweils aktuell ermittelt. Die Steuerung erfolgt dann jederzeit anhand des jeweils ermittelten Kennwertes 65, bis z. B. eine Überlastereignisgrenze 69 wieder unterschritten wird.

Falls keine Schereinrichtung 42 vorhanden ist, kann die Überlastereignisgrenze 69 auch als Grenze für die Erkennung eines Überlastereignisses 63 genommen werden. Bei Belastungen kleiner der Überlastereignisgrenze 69 kann der Energieabsorber eine Komfortfunktion wahrnehmen und kleinere Stöße dämpfen. Ein gewisser Anteil des Hubs kann für Überlastfälle reserviert sein. Der reservierte Anteil kann von der aktuellen Gefährdungssituation abhängen.

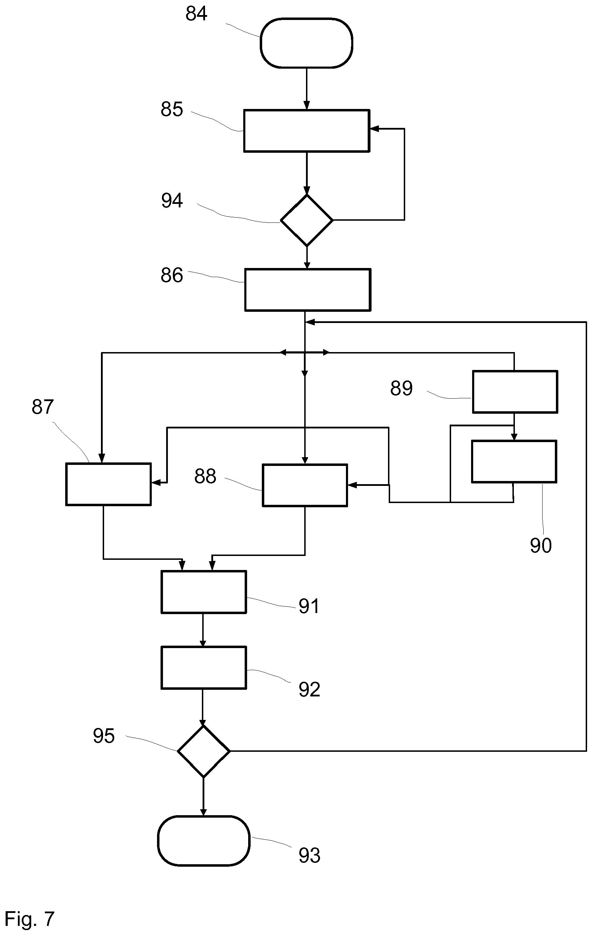

Fig. 7 zeigt eine stark schematische Darstellung eines Steuerungsablaufes in einer konkreten Ausgestaltung. Bei Start 84 beginnt das Verfahren. Hier wird z. B. die Schereinrichtung 42 in einer Endlosschleife abgefragt, um eine Explosion zu erkennen. Falls im Schritt 85 eine Explosion oder ähnliche Störung erkannt wurde, wird die Endlosschleife an der Verzweigung 94 verlassen und es wird die Steuerung 48 initialisiert. Das erfolgt in Schritt 86. Dort wird der Steueralgorithmus 87 auch veranlasst, den Energieabsorber zunächst für eine vorgegebene Zeitspanne 67 zunächst mit der maximalen Dämpfung 66 bzw. 71 zu beaufschlagen. Diese Zeitspanne 67 dient zur Vorspannung aller beteiligter (mechanischer) Komponenten inkl. des Objekts 103. Ab dem Zeitpunkt t0 und insbesondere nach Ablauf der Zeitspanne 103 werden aus Messwerten der Messung 89 periodisch charakteristische Kennwerte 65 in einer Kennwertbestimmung 90 abgeleitet. Die Kennwerte 65 und hier auch die Messwerte selbst werden an den Regelungsalgorithmus 88 weiter geleitet. Der Regelungsalgorithmus 88 leitet die Daten weiter und im Schritt 91 wird eine Stellgröße berechnet. Zur Berechnung der Stellgröße und hier des Stromwertes werden zusätzlich Daten des Steueralgorithmus 87 verwendet, dem ebenfalls die Messwerte zugeleitet werden. Schließlich wird der Aktor im Schritt 92 bestromt. Danach wird der Regelkreis erneut durchlaufen und es geht zurück zum Schritt 88. Dort werden die aktuellen Messwerte empfangen. Der Istwert wird mit dem Sollwert verglichen und es wird gegebenenfalls nachgeregelt. Falls im Schritt 95 festgestellt wird, dass das Überlastereignis bzw. die Explosion beendet ist, wird über die Verzweigung 95 das Ende 93 der Steuerung eingeleitet. Das Ende 93 kann direkt wieder zum Start 84 führen, um weitere Störungen erkennen zu können.

In allen Weiterbildungen, Ausführungen und Ausführungsbeispielen kann das auf einer Beladungseinheit transportiertes Objekt mittelbar oder unmittelbar auf der Beladungseinheit und/oder damit gekoppelt und/oder darauf angeordnet sein. Es kann eine feste und/oder lösbare Verbindung sein. Oder das Objekt wird auf der Beladungseinheit platziert und durch Gewichtskraft gehalten.

**Bezugszeichenliste:**

| | | | |
|---|---|---|---|
| 1 | Baugruppe | 63 | Überlastereignis |
| 2 | Energieabsorber | 64 | Grenzbelastung |
| 3 | Befestigungseinrichtung | 65 | Kennwert |
| 4 | Halteeinrichtung | 66 | vorbestimmtes Maß |
| 5 | Absorberzylinder | 67 | vorgegebene Zeitspanne |
| 6 | Kolbeneinrichtung | 68 | Sensoreinheit |
| 7 | Absorberkolben | 69 | Überlastereignisgrenze |
| 8 | Kolbenstange | 70 | Stromverlauf |
| 9 | Absorberkammer | 71 | maximaler Wert |
| 10 | erste Kammer | 72 | reduzierter Wert |
| 11 | zweite Kammer | 73 | Rampe |
| 12 | Absorberfluid | 80 | Belastungsverlauf |
| 13 | Absorberventil | 81 | maximale Belastung |
| 14 | Absorberkanal | 82 | Plateau |
| 16 | elektrische Spule | 83 | nachlassende Belastung |
| 16a | Dauermagnet | 84 | Start |
| 21 | Sitzeinrichtung | 85 | Explosionserkennung |
| 21a | Sitzfläche | 86 | Initialisierung |
| 22 | Hohlraum (in 8) | 87 | Steueralgorithmus |
| 26 | Ende | 88 | Regelungsalgorithmus |
| 28 | Ringraum | 89 | Messung |
| 30 | Symmetrieachse (von 5, 8) | 90 | Kennwertbestimmung |
| 32 | Rückstelleinrichtung | 91 | Stellgröße berechnen |
| 38 | Vorspanneinrichtung | 92 | Aktor bestromen |
| 39 | Abschlussdeckel | 93 | Ende |
| 40 | Ruhezustand | 94 | Verzeigung |
| 41 | Absorberzustand | 95 | Verzeigung |
| 42 | Schereinrichtung | t0 | Zeitpunkt |
| 43 | Vorspannfeder | t1 | Zeitpunkt |
| 45 | Führungsbuchse | t2 | Zeitpunkt |
| 46 | Dichtung | t2a | Zeitpunkt |
| 47 | Energiespeicher | t3 | Zeitpunkt |
| 48 | Steuerungseinheit | 100 | Beladungseinheit |
| 50 | Transportmittel, Fahrzeug | 101 | Aufnahmeeinheit |
| 51 | Karosserie | 102 | Trägereinrichtung |
| 52 | Reifen | 103 | Objekt |
| 60 | Minenschutzsitz | 104 | Gegenstand |
| 61 | Sensoreinrichtung | 105 | Person |
| 62 | Messwerte | | |

## Patentansprüche

1. Verfahren zum Absorbieren von Energie bei einem Überlastereignis mit einem Energieabsorber (2), um Belastungen auf ein auf einer Beladungseinheit (100) transportiertes Objekt (103) zu reduzieren,
wobei der Energieabsorber (2) geeignet ist, bei einem einmaligen Überlastereignis mit einem derart hohen Energieeintrag, bei dem ohne Energieabsorber ein Schaden an dem Objekt überwiegend wahrscheinlich wäre, Energie zu absorbieren, um durch die Energieabsorption des Energieabsorbers (2) bei dem Überlastereignis eine resultierende Belastung auf das Objekt zu reduzieren,
wobei mit einer Sensoreinrichtung (61) Messwerte (62) über den aktuellen Zustand der Beladungseinheit (100) erfasst werden,
**dadurch gekennzeichnet,**
**dass** eine Steuereinrichtung (48) aus den erfassten Messwerten (62) ein Überlastereignis (63) erkennt, und dass eine Dämpfung des Energieabsorbers (2) wenigstens direkt nach der Erkennung des Überlastereignisses (63) auf einen hohen Wert näher an einem maximalen Wert als an einem minimalen Wert eingestellt wird und die Dämpfung für eine vorgegebene Zeitspanne (67) beibehalten wird, wobei diese vorgegebene Zeitspanne (67) so bemessen ist, dass während dieser vorgegebenen Zeitspanne (67) eine Mehrzahl aufeinanderfolgender Messwerte (62) erfasst wird, und dass die Dämpfung nach der vorgegebenen Zeitspanne (67) in Abhängigkeit von den während des Überlastereignisses erfassten Messwerten (62) gesteuert wird, um die Belastung für auf der Beladungseinheit (100) transportierte Objekte (103) während der vorgegebenen Zeitspanne (67) zunächst bis zu einer vorgegebenen Grenzbelastung (64) zu erhöhen und nach der vorgegebenen Zeitspanne (67) in Abhängigkeit von den während des Überlastereignisses erfassten Messwerten (62) zu steuern.

2. Verfahren nach Anspruch 1, wobei die Steuereinrichtung aus den Messwerten (62) periodisch charakteristische Kennwerte (65) für eine Belastung der Beladungseinheit (100) ableitet.

3. Verfahren nach einem der vorhergehenden Ansprüche, wobei an der Beladungseinheit (100) eine Schereinrichtung (42) vorgesehen ist, die abgeschert wird, wenn die auf die Beladungseinheit (100) einwirkende Belastung ein vorbestimmtes Maß (66) überschreitet, wobei die Steuereinrichtung (48) ein Überlastereignis (63) erkennt, wenn ein Schersensor (67) ein Abscheren der Schereinrichtung (42) detektiert.

4. Verfahren nach einem der vorhergehenden Ansprüche, wobei die Steuereinrichtung (48) ein Überlastereignis (63) erkennt, wenn ein charakteristischer Kennwert (65) ein vorbestimmtes Maß (66) überschreitet.

5. Verfahren nach dem vorhergehenden Anspruch, wobei die Dämpfung direkt nach der vorgegebenen Zeitspanne (67) auf einen geringeren Wert der Dämpfung (71) reduziert wird und danach in Abhängigkeit von dem charakteristischen Kennwert (65) gesteuert und/oder wieder vergrößert wird und/oder wobei die Dämpfung über die vorgegebene Zeitspanne hinaus auf dem hohen Wert beibehalten wird.

6. Verfahren nach einem der vorhergehenden Ansprüche, wobei der Energieabsorber (2) nach Erkennung eines Überlastereignisses (63) während der vorgegebenen Zeitspanne (67) maximal gedämpft wird.

7. Verfahren nach einem der vorhergehenden Ansprüche in Kombination mit Anspruch 2 und/oder Anspruch 4, wobei der Energieabsorber (2) nach Ablauf der vorgegebenen Zeitspanne (67) zeitabhängig in Abhängigkeit von dem jeweils aktuell abgeleiteten charakteristischen Kennwert (65) gesteuert wird und/oder wobei die Dämpfung des Energieabsorbers (2) reduziert wird, wenn der charakteristische Kennwert (65) eine vorgegebene zulässige Grenzbelastung (64) für Personen erreicht oder überschreitet, wobei die zulässige Grenzbelastung (64) vorzugsweise für eine Standardperson vorgegeben wird.

8. Verfahren nach einem der vorhergehenden Ansprüche, wobei Sensorwerte einer an einem Objekt (103) angeordneten Sensoreinheit (68) berücksichtigt werden und/oder wobei mit der Beladungseinheit (100) ein Sensormittel gekoppelt ist, um ein Gewicht eines transportierten Objekts (103) und/oder eine Beschleunigung der Beladungseinheit (100) zu ermitteln.

9. Verfahren nach einem der vorhergehenden Ansprüche, wobei eine Komfortfunktion integriert ist und kleinere Stöße unterhalb einer Überlastereignisgrenze (69) gedämpft werden.

10. Verfahren nach einem der vorhergehenden Ansprüche, wobei der Energieabsorber (2) über ein Absorberventil (13) verfügt, dessen Dämpfung über eine Stärke eines angelegten Magnetfeldes gesteuert wird.

11. Baugruppe (1) mit einer Beladungseinheit (100) zum Transport von Objekten (103) und einem Energieabsorber (2) zum Absorbieren von Energie bei einem Überlastereignis, um Belastungen auf ein auf einer Beladungseinheit (100) transportiertes Objekt (103) zu reduzieren,
wobei der Energieabsorber (2) geeignet und eingerichtet ist, bei einem einmaligen Überlastereignis mit einem derart hohen Energieeintrag, bei dem ohne Energieabsorber ein Schaden an dem Objekt überwiegend wahrscheinlich wäre, Energie zu absorbieren, um durch die Energieabsorption des Energieabsorbers (2) bei dem Überlastereignis eine resultierende Belastung auf das Objekt zu reduzieren,
wobei eine Steuereinrichtung (48) und wenigstens eine Sensoreinrichtung (61) zur Erfassung von Messwerten (62) über den aktuellen Zustand der Beladungseinheit (100) und wenigstens der Energieabsorber (2) vorgesehen sind, wobei der Energieabsorber (2) mit den Messwerten (62) durch die Steuereinrichtung (48) steuerbar ist,
**dadurch gekennzeichnet**,
Inventus
dass die Steuereinrichtung (48) dazu eingerichtet und ausgebildet ist, aus den erfassten Messwerten (62) ein Überlastereignis (63) zu erkennen, und eine Dämpfung des Energieabsorbers (2) wenigstens direkt nach der Erkennung des Überlastereignisses (63) auf einen hohen Wert näher an einem maximalen Wert als an einem minimalen einzustellen und die Dämpfung für eine vorgegebene Zeitspanne (67) beizubehalten, wobei diese vorgegebene Zeitspanne (67) so bemessen ist, dass während dieser vorgegebenen Zeitspanne (67) eine Mehrzahl aufeinanderfolgender Messwerte (62) erfasst wird, und dass die Dämpfung nach der vorgegebenen Zeitspanne (67) in Abhängigkeit von den während des Überlastereignisses erfassten Messwerten (62) gesteuert wird, um die Belastung für auf der Beladungseinheit (100) transportierte Objekte (103) zunächst bis zu einer vorgegebenen Grenzbelastung (64) zu erhöhen und nach der vorgegebenen Zeitspanne (67) in Abhängigkeit von den während des Überlastereignisses erfassten Messwerten (62) zu steuern.

12. Baugruppe (1) nach dem vorhergehenden Anspruch, wobei die Sensoreinrichtung (61) an der Baugruppe (1) befestigt ist und/oder eine an einem Objekt (103) anordnenbare Sensoreinheit (68) vorgesehen ist, welche drahtgebunden oder drahtlos koppelbar ist und/oder wobei mit der Beladungseinheit (100) ein Sensormittel gekoppelt ist, um ein Gewicht eines transportierten Objekt (103) und/oder eine Beschleunigung der Beladungseinheit (100) zu ermitteln.

13. Baugruppe (1) nach einem der drei vorhergehenden Ansprüche, wobei der Energieabsorber (2) über wenigstens ein Absorberventil (13) verfügt, dessen Dämpfung über eine Stärke eines angelegten Magnetfeldes gesteuert wird.

14. Baugruppe (1) nach einem der vier vorhergehenden Ansprüche, wobei an der Beladungseinheit (100) eine Schereinrichtung (42) vorgesehen ist, die abscherbar ist, wenn die auf die Beladungseinheit (100) einwirkende Belastung ein vorbestimmtes Maß (66) überschreitet.

15. Baugruppe (1) nach einem der fünf vorhergehenden Ansprüche, wobei die Beladungseinheit (100) als Sitzeinrichtung (21) von einem Fahrzeug ausgebildet ist, wobei die Sitzeinrichtung (21) eine als Sitz ausgebildete Aufnahmeeinheit (101) und eine als Sitzrahmen ausgebildete Trägereinrichtung (102)) umfasst, wobei der Energieabsorber (2) zwischen dem Sitz und dem Sitzrahmen angebracht ist.

## Claims

1. Method for absorbing energy in an overload event by means of an energy absorber (2) to reduce loads acting on an object (103) transported on a loading unit (100),
wherein the energy absorber (2) is suitable to absorb energy in a single overload event involving energy input that is so high that absent an energy absorber, damage to the object is highly probable, so as to reduce loads on the object resulting from the energy absorption by the energy absorber (2) in the overload event,
wherein a sensor device (61) captures measurement values (62) of the current state of the loading unit (100),
**characterized in**
**that** a control device (48) detects an overload event (63) from the captured measurement values (62), and that at least immediately after detecting the overload event (63) damping by the energy absorber (2) is set to a high value closer to a maximum value than to a minimum value and damping is maintained for a predetermined time period (67),
such predetermined time period (67) being metered such that during this predetermined time period (67) a plurality of successive measurement values (62) is captured,
and **that** after the predetermined time period (67), damping is controlled in dependence on the measurement values (62) captured during the overload event to initially increase the load on objects (103) transported on the loading unit (100) during the predetermined time period (67) up to a predetermined limit load (64), and after expiry of the predetermined time period (67), damping is controlled in dependence on the measurement values (62) captured during the overload event.

2. The method according to claim 1 wherein the control device periodically derives from the measurement values (62) characteristic values (65) for a load on the loading unit (100).

3. The method according to any of the preceding claims wherein the loading unit (100) is provided with a shearing device (42) which shears off as the load acting on the loading unit (100) exceeds a predetermined amount (66) wherein the control device (48) detects an overload event (63) when a shearing sensor (67) detects that the shearing device (42) shears off.

4. The method according to any of the preceding claims wherein the control device (48) detects an overload event (63) when a characteristic value (65) exceeds a predetermined amount (66).

5. The method according to the preceding claim wherein immediately following the predetermined time period (67) the damping is reduced to a lower damping value (71) and thereafter, in dependence on the characteristic value (65), damping is controlled and/or increased again and/or wherein damping is maintained on the high value beyond the predetermined time period.

6. The method according to any of the preceding claims wherein after detecting an overload event (63) the energy absorber (2) is maximally damped during the predetermined time period (67).

7. The method according to any of the preceding claims in combination with claim 2 and/or claim 4, wherein after expiry of the predetermined time period (67) the energy absorber (2) is controlled time-dependent in dependence on what is the currently derived characteristic value (65) and/or wherein the damping of the energy absorber (2) is reduced when the characteristic value (65) reaches or exceeds a predetermined permissible limit load (64) for persons, the permissible limit load (64) preferably being predetermined for a standard individual.

8. The method according to any of the preceding claims wherein sensor values from a sensor unit (68) disposed on an object (103) are taken into account and/or wherein the loading unit (100) is coupled with a sensor means to obtain the weight of a transported object (103) and/or the acceleration of the loading unit (100).

9. The method according to any of the preceding claims wherein a comfort function is incorporated for damping minor shocks beneath an overload event limit (69).

10. The method according to any of the preceding claims wherein the energy absorber (2) is provided with an absorber valve (13) the damping of which is controlled by the strength of an applied magnetic field.

11. Assembly (1) including a loading unit (100) for transporting objects (103) and an energy absorber (2) for absorbing energy in an overload event to reduce loads acting on an object (103) transported on a loading unit (100),
wherein the energy absorber (2) is suitable and set up to absorb energy in a single overload event involving energy input that is so high that absent an energy absorber, damage to the object transported on the loading unit (100) is highly probable, so as to reduce resulting loads acting on the transported object in the overload event by way of energy absorption by means of the energy absorber (2),
wherein a control device (48) and at least one sensor device (61) for capturing measurement values (62) about the current state of the loading unit (100) and at least the energy absorber (2) are provided, the control device (48) controlling the energy absorber (2) by way of the measurement values (62),
**characterized in**
**that** the control device (48) is set up and configured to detect an overload event (63) from the captured measurement values (62), and at least immediately after detecting the overload event (63), to set damping by the energy absorber (2) to a high value closer to a maximum value than a minimum value and to maintain the damping for a predetermined time period (67), such predetermined time period (67) being metered such that during this predetermined time period (67) a plurality of successive measurement values (62) is captured,
and **that** after the predetermined time period (67) damping is controlled in dependence on the measurement values (62) captured during the overload event to initially increase the load on objects (103) transported on the loading unit (100) up to a predetermined limit load (64), and after expiry of the predetermined time period (67), damping is controlled in dependence on the measurement values (62) captured during the overload event.

12. The assembly (1) according to the preceding claim wherein the sensor device (61) is attached to the assembly (1) and/or a sensor unit (68) is provided that can be disposed on an object (103) and can be coupled wire-bound or wireless and/or wherein the loading unit (100) is coupled with a sensor means to obtain the weight of a transported object (103) and/or the acceleration of the loading unit (100).

13. The assembly (1) according to any of the three preceding claims wherein the energy absorber (2) is provided with at least one absorber valve (13) the damping of which is controlled by the strength of an applied magnetic field.

14. The assembly (1) according to any of the four preceding claims wherein the loading unit (100) is provided with a shearing device (42) which shears off as the load acting on the loading unit (100) exceeds a predetermined amount (66).

15. The assembly (1) according to any of the five preceding claims wherein the loading unit (100) is configured as a seat device (21) in a vehicle, the seat device (21) comprising a receiving unit (101) configured as a seat and a supporting device (102) configured as a seat frame with the energy absorber (2) disposed between the seat and the seat frame.

## Revendications

1. Procédé d'absorption d'énergie au cours d'un événement de surcharge, doté d'un absorbeur d'énergie (2) pour réduire les charges sur un objet (103) transporté sur une unité de chargement (100),
l'absorbeur d'énergie (2) étant, au cours d'un événement unique de surcharge avec un apport d'énergie si élevé qu'en absence d'absorbeur d'énergie, un dommage de l'objet serait essentiellement vraisemblable, apte à absorber de l'énergie pour réduire une charge résultante sur l'objet, par l'absorption d'énergie réalisée par l'absorbeur d'énergie (2) au cours de l'événement de surcharge,
des valeurs de mesure (62) sur l'état actuel de l'unité de chargement (100) étant acquises à l'aide d'un dispositif de capteur (61),
**caractérisé en ce**
**qu'**un dispositif de contrôle (48) identifie un événement de surcharge (63) à partir des valeurs de mesure (62) acquises, et qu'une atténuation de l'absorbeur d'énergie (2) est réglée, au moins directement après l'identification de l'événement de surcharge (63), à une valeur élevée plus proche d'une valeur maximale que d'une valeur minimale et l'atténuation est maintenue pour un laps de temps donné (67), ledit laps de temps donné (67) étant tel que pendant ce laps de temps donné (67) une pluralité de valeurs de mesure (62) successives sont acquises, et que l'atténuation est contrôlée après le laps de temps donné (67) en fonction des valeurs de mesure (62) acquises pendant l'événement de surcharge afin d'augmenter la charge pour les objets (103) transportés sur l'unité de chargement (100) pendant le laps de temps donné (67), tout d'abord jusqu'à une charge limite (64) donnée, et pour la contrôler après le laps de temps donné (67) en fonction des valeurs de mesure (62) acquises pendant l'événement de surcharge.

2. Procédé selon la revendication 1, le dispositif de contrôle déduisant des paramètres caractéristiques (65) périodiques pour une charge de l'unité de chargement (100) à partir des valeurs de mesure (62).

3. Procédé selon l'une quelconque des revendications précédentes, étant prévu à l'unité de chargement (100) un dispositif de coupe (42) qui est coupé lorsque la charge appliquée à l'unité de chargement (100) dépasse un niveau prédéterminé (66), le dispositif de contrôle (48) identifiant un événement de surcharge (63) lorsqu'un capteur de coupe (67) détecte une coupe du dispositif de coupe (42).

4. Procédé selon l'une quelconque des revendications précédentes, le dispositif de contrôle (48) identifiant un événement de surcharge (63) lorsqu'un paramètre caractéristique (65) dépasse un niveau prédéterminé (66).

5. Procédé selon la revendication précédente, l'atténuation étant, directement après le laps de temps donné (67), réduite à une valeur moindre de l'atténuation (71) et ensuite contrôlée en fonction du critère caractéristique (65) et/ou re-augmentée et/ou l'atténuation étant maintenue à la valeur élevée au-delà du laps de temps donné.

6. Procédé selon l'une quelconque des revendications précédentes, l'absorbeur d'énergie (2) étant atténué au maximum après identification d'un événement de surcharge (63) pendant le laps de temps donné (67).

7. Procédé selon l'une quelconque des revendications précédentes en combinaison avec la revendication 2 et/ou la revendication 4, l'absorbeur d'énergie (2) étant contrôlé à expiration du laps de temps donné (67) en fonction du temps en fonction du critère caractéristique (65) respectif actuellement déduit et/ou l'atténuation de l'absorbeur d'énergie (2) étant réduit lorsque le critère caractéristique (65) atteint ou dépasse une charge limite autorisée (64) donnée pour les personnes, la charge limite autorisée (64) étant donnée de préférence pour une personne standard.

8. Procédé selon l'une quelconque des revendications précédentes, des valeurs de capteur d'une unité de capteur (68) agencée sur un objet (103) étant prises en compte et/ou un moyen de capteur étant couplé à l'unité de chargement (100) pour déterminer un poids d'un objet (103) transporté et/ou une accélération de l'unité de chargement (100) .

9. Procédé selon l'une quelconque des revendications précédentes, une fonction de confort étant intégrée et des coups assez faibles en dessous d'une limite de surcharge (69) étant atténués.

10. Procédé selon l'une quelconque des revendications précédentes, l'absorbeur d'énergie (2) disposant d'une soupape d'absorption (13) dont l'atténuation est contrôlée par le biais d'une puissance d'un champ magnétique appliqué.

11. Module (1) doté d'une unité de chargement (100) destiné au transport d'objets (103), et d'un absorbeur d'énergie (2) destiné à absorber l'énergie au cours d'un événement de surcharge pour réduire les charges sur un objet (103) transporté sur une unité de chargement (100),
l'absorbeur d'énergie (2) étant, au cours d'un événement unique de surcharge avec un apport d'énergie si élevé qu'en absence d'absorbeur d'énergie un dommage de l'objet pourrait être essentiellement vraisemblable, apte et destiné à absorber de l'énergie pour réduire par le biais de l'absorption d'énergie réalisée par l'absorbeur d'énergie (2) au cours de l'événement de surcharge une charge résultante sur l'objet, étant prévus un dispositif de contrôle (48) et au moins un dispositif de capteur (61) pour acquérir des valeurs de mesure (62) sur l'état actuel de l'unité de chargement (100) et au moins l'absorbeur d'énergie (2), ledit absorbeur d'énergie (2) étant susceptible d'être contrôlé avec les valeurs de mesure (62) par le biais du dispositif de contrôle (48),
**caractérisé en ce**
**qu'**un dispositif de contrôle (48) est destiné et conçu pour identifier un événement de surcharge (63) à partir des valeurs de mesure (62) acquises, pour régler une atténuation de l'absorbeur d'énergie (2) au moins directement après l'identification de l'événement de surcharge (63), à une valeur élevée plus proche d'une valeur maximale que d'une valeur minimale et pour maintenir l'atténuation pour un laps de temps donné (67), ledit laps de temps donné (67) étant tel que pendant ce laps de temps donné (67) une pluralité de valeurs de mesure (62) successives sont acquises, et que l'atténuation est contrôlée après le laps de temps donné (67) en fonction des valeurs de mesure (62) acquises pendant l'événement de surcharge pour augmenter la charge pour les objets (103) transportés sur l'unité de chargement (100), tout d'abord jusqu'à une charge limite (64) donnée, et pour la contrôler après le laps de temps donné (67) en fonction des valeurs de mesure (62) acquises pendant l'événement de surcharge.

12. Module (1) selon la revendication précédente, le dispositif de capteur (61) étant fixé au module (1) et/ou une unité de capteur (68) étant prévue susceptible d'être agencée sur un objet (103), laquelle unité de capteur est susceptible d'être couplée par voie filaire ou sans fil et/ou un moyen de capteur étant couplé à l'unité de chargement (100) pour déterminer un poids d'un objet (103) transporté et/ou une accélération de l'unité de chargement (100).

13. Module (1) selon l'une quelconque des trois revendications précédentes, l'absorbeur d'énergie (2) disposant d'au moins une soupape d'absorption (13) dont l'atténuation est contrôlée par le biais d'une puissance d'un champ magnétique appliqué.

14. Module (1) selon l'une quelconque des quatre revendications précédentes, étant prévu sur l'unité de chargement (100) un dispositif de coupe (42) qui est susceptible d'être coupé lorsque la charge appliquée à l'unité de chargement (100) dépasse un niveau prédéterminé (66).

15. Module (1) selon l'une quelconque des cinq revendications précédentes, l'unité de chargement (100) étant conçue sous la forme d'un dispositif d'assise (21) d'un véhicule, ledit dispositif d'assise (21) comprenant une unité d'accueil (101) conçue sous forme de siège et un dispositif de support (102) conçu sous forme de cadre de siège, l'absorbeur d'énergie étant monté entre le siège et le cadre de siège.
